# EUROPEAN PATENT APPLICATION

(11) **EP 2 186 776 A1**
(43) Date of publication of application: **19.05.2010**
(21) Application number: 08792187.0
(22) Date of filing: 05.08.2008
(51) Int. Cl.: C01B 33/44

(54) **ORGANIZED CLAY COMPLEX, METHOD FOR PRODUCING THE SAME, AND RESIN COMPLEX CONTAINING ORGANIZED CLAY COMPLEX**

(30) Priority: 09.08.2007 JP 2007207378
(71) Applicant: Showa Denko K.K., Tokyo 105-8518 (JP)
(72) Inventor: KUMAKI, Terutoshi, Kawasaki-shi Kanagawa 210-0858 (JP)
(74) Representative: Strehl Schübel-Hopf & Partner
(86) International application number: PCT/JP2008/063990
(87) International publication number: WO 2009/020107

(57) **Abstract**

The present invention relates to a method for producing an organized clay composite, wherein a step for cation exchanging an interlayer metal cation of a lamellar clay mineral to an organic onium ion by swelling the lamellar clay mineral with water or an aqueous solvent and then adding and mixing thereinto an emulsion which is obtained in advance by emulsifying a curable resin composition with use of an organic onium salt or with use of an organic onium salt and a nonionic surfactant, and a step for introducing the curable resin composition into the interlayer of the lamellar clay mineral are performed simultaneously. The present invention also relates to an organized clay composite obtained by the method. The present invention further relates to a resin molded product obtained by molding/curing such an organized clay composite. In the oreganized clay composite, the compound introduced into the interlayer of the lamellar clay mineral does not affect the physical properties of the matrix into which the organized clay is dispersed. Consequently, the organized clay composite has an expanded interlayer distance, while exhibiting good dispersibility.

## Description

### TECHNICAL FIELD

The present invention relates to an organized clay composite, the method for producing the same, and a resin molded product obtained by molding the organized clay composite. Specifically, the present invention relates to an organized clay composite obtained by adding an emulsion in which a resin composition having a three-dimensional crosslinked structure is emulsified using organic onium salt or using organic onium salt and a surfactant to water or an aqueous solvent in which a lamellar clay mineral is swollen and mixing them; the method for producing the organized clay composite; and a resin molded product obtained by the same.

### BACKGROUND ART

The lamellar clay mineral represented by phyllosilicate is used as a filler or a reinforcer for the purpose of improving physical properties such as toughness, mechanical property and heat distortion resistance of a polymer material such as rubber and plastic. In this case, by delaminating and dispersing the lamellar crystal structure, great improvement of properties can be expected even when a small amount of the lamellar clay mineral is added to the polymer material. Attempts have been made to facilitate the intercalation of a composition serving as matrix between the interlayer of the lamellar clay mineral by expanding the interlayer of the lamellar clay mineral in advance.

For example, it has been tried to facilitate intercalation of various organic substances so as to improve the dispersibility of the clay mineral by selecting the type of the organic onium salt (see JP-AH05-163014 publication; Patent Document 1 and JP-A-H07-187656; Patent Document 2). Though the organized clay obtained by cation exchange using an organic onium salt can achieve a satisfactory intercalation into layers as to a low-viscosity organic substance, the interlayer distance of the clay was not expanded enough to easily achieve intercalation as to a high-viscosity organic substance such as liquid resin.

Also, as a method for introducing an organic component in addition to the organic cation between the layers, the following methods have been proposed: i.e. a method for producing a composite by carrying out the cation exchange with a cation initiator and a cation chain transfer agent followed by carrying out polymerization reaction by adding a monomer, a polymerization initiator and an emulsifier (see JP-A-2005-517054 publication (corresponding to WO03/066686) Patent Document 3) and a method for intercalating a specific organic compound between the layers after performing an organizing treatment with a silane coupling agent (see JP-A-H09-227778 publication; Patent Document 4 and JP-A-H10-259017; Patent Document 5). However, the former prior art does not specifically describe the state of the delamination in the form of composite particles, while the latter prior art has a problem such that a compound to be intercalated is limited or that it may raise concerns that the intercalated compound may adversely affect the physical properties of the matrix in which the organized clay is dispersed.

Patent Document 1: JP-A-H05-163014
Patent Document 2: JP-A-H07-187656
Patent Document 3: JP-A-2005-517054
Patent Document 4: JP-A-H09-227778
Patent Document 5: JP-A-H10-259017

### DISCLOSURE OF INVENTION

### Problems to be Solved by the Invention

An objective of the present invention is to provide an organized clay composite which exhibits sufficient dispersibility with an expanded interlayer distance between the layers, wherein the compound intercalated between the layers of the clay mineral will not adversely affect the physical properties of the matrix in which the clay mineral is dispersed; a method producing the organized clay composite; and a resin composite, particularly a transparent resin composite, obtained by directly molding the organized clay composite or by uniformly dispersing the composite in a matrix.

### Means to Solve the Problem

As a result of intensive studies on the above problem, the present inventors have found that by organizing a lamellar clay mineral and making a composite of the lamellar clay mineral with a matrix through a specific method, an organized clay composite having excellent dispersibility and a resin composite comprising the organized clay uniformly dispersed therein can be obtained and accomplished the present invention.

That is, the present invention encompasses the method for producing an organized clay composite in the following 1 to 9, the organized clay composite in the following 10 to 14 and a resin molded product in the following 15 to 16.
1. The method for producing an organized clay composite characterized in simultaneously performing the following steps:
   a step of performing cation exchange from the metal cation between the layers of a lamellar clay mineral to an organic onium ion; and
   a step of intercalating a curable resin composition between the layers of the lamellar clay mineral, by after swelling a lamellar clay mineral with water or an aqueous solvent, adding and mixing thereto an emulsion in which a curable resin composition is emulsified in advance using an organic onium salt or using an organic onium salt and a nonionic surfactant.
2. The method for producing the organized clay composite as described in 1 above, wherein the organic modification of the hydroxy groups located on the edges of the swollen mineral is conducted before adding and mixing the emulsion.
3. The method for producing the organized clay composite as described in 2 above, wherein the organic modification of the hydroxy groups located on the edges of the swollen mineral is performed by a treatment with a silane coupling agent.
4. The method for producing the organized clay composite as described in 3 above, wherein the silane coupling agent used in the treatment by the silane coupling agent is 1 to 150 part(s) by mass to 100 parts by mass of the lamellar clay mineral.
5. The method for producing the organized clay composite as described in 1 above, in which the use amount of the organic onium ions salt is from 60 to 120 % of methylene blue (MB) adsorption equivalent of the lamellar clay mineral.
6. The method for producing the organized clay composite as described in 1 above, wherein the lamellar clay mineral is layered silicate.
7. The method for producing the organized clay composite as described in 6 above, wherein the layered silicate is at least one member selected from a group consisting of smectite, talc, kaolinite and mica.
8. The method for producing the organized clay composite as described in 1 above, wherein, as to the ratio of the lamellar clay mineral and water or an aqueous solvent, the mass of the lamellar clay mineral is 1 to 5% to the total mass of the lamellar clay mineral and water or an aqueous solvent.
9. The method for producing the organized clay composite as described in 1 above, wherein the lamellar clay mineral has an average-number particle diameter of 10 to 300 nm and the cured product of the curable resin composition is transparent.
10. An organized clay composite produced by the production method described in any one of 1 to 9 above.
11. An organized clay composite in which the edges of the lamellar clay mineral having an average-number particle diameter of 10 to 300 nm are organically modified and an organic onium ions and a curable resin composition are present between the layers of the lamellar clay mineral.
12. The organized clay composite as described in 11 above, wherein the lamellar clay mineral is layered silicate.
13. The organized clay composite as described in 12 above, wherein the layered silicate is at least one member selected from a group consisting of smectite, talk, kaolinite and mica.
14. An organized clay composite as described in 10 or 11 above, wherein the curable resin composition is a radically curable liquid resin composition.
15. A resin molded product obtained by molding and curing the organized clay composite described in any one of 10 to 14 above.
16. The transparent resin molded product as described in 15 above, wherein the resin molded product is a transparent film or a transparent plate.

### EFFECTS OF THE INVENTION

The present invention makes it possible to provide an organized clay composite having excellent dispersibility and an expanded interlayer distance, wherein the compound intercalated between the layers of the clay mineral will not adversely affect the physical properties of the matrix in which the mineral clay is dispersed; the method for producing the resin composite; and a resin composite obtained by directly molding the organized clay composite or by uniformly dispersing the organized clay composite in a matrix.

The organized clay composite obtained by the present invention can be used with advantage for paint, print ink, coating materials and the like. By using a lamellar clay mineral having a number average particle diameter of 10 to 300 nm, a cured product of the organized clay composite having excellent dispersity can provide a transparent resin molded product which can particularly impart excellent mechanical properties and transparency to polymer materials such as rubber and plastic.

### BEST MODE FOR CARRYING OUT THE INVENTION

Hereinafter, the present invention is described in details.
In the present invention, an organized clay composite is obtained by adding emulsified liquid of a curable resin composition prepared in advance with an organic onium salt or a surfactant using an organic onium salt and a nonionic surfactant in combination to a liquid in which a lamellar clay mineral having a number average particle diameter of 10 to 300 nm is swollen with water or an aqueous solvent; and mixing them. In the obtained organized clay composite, cation exchange replacing the metal cations present between the layers of the lamellar clay mineral with an organic onium ions and intercalation of a curable resin composition between the lamellar clay mineral are simultaneously achieved.

In the present invention, a fluid resin composite in which the organized clay composite is dispersed in the curable resin composition can also be obtained. Examples of the fluid resin composite include paint, print ink and coating materials. Furthermore, a transparent resin molded product can be obtained by molding the resin composite or molding and curing the organized clay composite. Examples of the transparent molded product include a transparent cured product of well-known thermosetting resin compositions and photocurable resin compsitions described below.

[Number-average particle size of the lamellar clay mineral]
In order to make the resin composition in which organized clay composite is dispersed be a transparent one according to the present invention, the number-average particle size of the lamellar clay mineral as a material needs to be smaller enough than wavelength of visible light. The term "visible light" used herein means light with a wavelength of 400 to 800 nm. Therefore, it is preferable that the number-average particle size of the lamellar clay mineral be within a range of 10 to 300 nm, more preferably 30 to 200 nm. If the number-average particle size is less than 10 nm, satisfactory transparency can be achieved but mechanical properties such as the linear expansion coefficient, the improvement of which is another objective of adding the lamellar clay mineral, do not become small enough. If the size exceeds 300 nm, particles having sizes overlapping with visible light wavelength and therefore, it is disadvantageous in light of transparency.

The term "number-average particle size of the lamellar clay mineral" means a number-average particle size measured by dynamic light scattering method while dispersing the mineral in solvent.
A number-average particle size measured by dynamic light scattering method referred to, for example, pages 169 to 179 in "Measurements Techniques of Particle Diameter" (edited by The Society of Powder Technology, Japan: 1994). Examples of measurement apparatus used here include Dynamic Light Scattering Nano-Particle Size Analyzer LB-550 (manufactured by HORIBA, Ltd.). The number-average particle size of the lamellar clay mineral measured by the dynamic light scattering method can be considered to be substantially the same as number-average particle size of the lamellar clay mineral after dispersed in the resin layer in the present invention.

### [Lamellar clay mineral]

The lamellar clay mineral used in the present invention is layered silicate having a lamellar structure consisting of unit crystal layers stacked one on another. A swelling layered silicate showing a property of taking up water between the layers and being swollen in water or an aqueous solvent is preferably used. Preferred examples of such a lamellar clay mineral include smectites such as montmorillonite, hectorite, stevensite, saponite and beidellite and kaolinite, dickite, nacrite, halloysite, antigorite, chrysotile, pyrophylite, tetrasililic mica, sodium tainiolite, white mica, margarite, talc, vermiculite, phlogopite, xanthophyllite and chlorite. More preferred among these is at least one member selected from the group consisting of smectite, talc, kaolinite and mica in terms of dispersibility and size. Particularly, smectite is preferable in terms of the water-swelling behavior and size.

In the method for producing an organized clay of the present invention, by swelling a lamellar clay mineral in water or an aqueous solvent in advance and adding to the liquid an emulsion in which a curable resin composition is emulsified using organic onium salt or using organic onium salt and a surfactant and mixing them, cation exchange replacing metal cations present between the layers of a lamellar clay mineral with organic onium ions and intercalation of a curable resin composition between the layers of the lamellar clay mineral can be simultaneously carried out. Here, an aqueous solvent means a mixed solvent of water and an organic solvent which can be completely mixed with water as well as swell a lamellar clay mineral, and is preferably a mixed solvent of water and alcohol such as methanol, ethanol and isopropyl alcohol. If one tries to conduct cation exchange by adding a curable resin composition only to the aqueous solvent in advance, a uniform dispersion cannot be prepared since a curable resin composition is not dissolved in an aqueous solvent. Also, a uniform mixture cannot be obtained in the case where a curable resin composition is added after the cation exchange. Therefore, a desired organized clay composite having a curable resin composition intercalated between the layers cannot be obtained.

As an onium salt to be used for emulsifying the above-mentioned curable resin composition, commonly-known cationic surfactant can be used and examples include quaternary ammonium salt and quaternary phosphonium salt.
Among them, it is preferable to use alkyl ammonium ion salt having 6 or more carbon atoms, aromatic quaternary ammonium ion salt or heterocyclic quaternary ammonium ion salt.

There is no limitation on the quaternary ammonium salt. Examples thereof include trimethyl alkyl ammonium salt, triethyl alkyl ammonium salt, tributylalkyl ammonium salt, dimethyl dialkyl ammonium salt, dibutyl dialkyl ammonium salt, methylbenzyl dialkyl ammonium salt, dibenzyl dialkyl ammonium salt, trialkyl methyl ammonium salt, trialkyl ethyl ammonium salt, trialkyl butyl ammonium salt; quaternary ammonium salts having an aromatic ring such as benzylmethyl{2-[2-(p-1,1,3,3-tetramethylbutylphenoxy)ethoxy]ethyl}ammonium chloride; quaternary ammonium salts derived from aromatic amine such as trimethylphenyl ammonium; quaternary ammonium salts having a heterocyclic ring such as alkyl pyridinium salt and imidazolium salt; dialkyl quaternary ammonium salt having two polyethylene glycol chains, dialkyl quaternary ammonium salt having two polypropylene glycol chains, trialkyl quaternary ammonium salt having one polyethylene glycol chain, and trialkyl quaternary ammonium salt having one polypropylene glycol chain. Among them, lauryl trimethyl ammonium salt, stearyl trimethyl ammonium salt, trioctyl methyl ammonium salt, dimethyl dioctadecyl ammonium salt, dialkyl dimethyl ammonium salt, distearyl dibenzyl ammonium salt, N-polyoxyethylene-N-lauryl-N,N-dimethyl ammonium salt and quaternary ammonium salt having three polyethylene glycol chains are preferred. One of these quaternary ammonium salts may be used singly or two or more of them may be used in combination.

Among the above-mentioned ammonium salts, it is preferable to use trioctyl methylammonium salt or dimethyl dioctadecyl ammonium salt and polyoxyethylenealkyl (C8-C18) methylammonium salt (alkyl quaternary ammonium salt having three polyethylene glycol chains) in combination.

There is no limitation on the quaternary phosphonium salt. Examples thereof include dodecyl triphenylphosphonium salt, methyl triphenyl phosphonium salt, lauryl trimethyl phosphonium salt, stearyl trimethyl phosphonium salt, trioctyl methyl phosphonium salt, tributyl dodecyl phosphonium salt, stearyl tributyl phosphonium salt, trioctyl methyl phosphonium salt, distearyl dimethyl phosphonium salt and distearyl dibenzyl phosphonium salt. One of these quaternary phosphonium salts may be used singly or two or more of them may be used in combination.

Among these, it is preferable to use tributyl dodecyl phosphonium salt or stearyl tributyl phosphonium salt.
In the production method of the present invention, cation exchange of an inorganic cation of the lamellar clay mineral to an onium ion and organic modification of the interlayer are carried out by an onium salt used at the time of emulsification. The amount of the onium salt used in the present invention is preferably 60 to 120%, more preferably 75 to 100% of methylene blue (MB) adsorption equivalent which corresponds to equivalent weight of ion-exchange. If the cation exchange capacity is less than 60% of MB adsorption equivalent, a desired dispersibility cannot be achieved. If the cation exchange capacity exceeds 120%, the onium salt in excess will affect adversely the properties of the matrix after the onium salt is added.

In the present invention, a nonionic surfactant can be used in combination with an onium salt at the time of emulsification. Examples of the nonionic surfactant include sorbitan fatty acid ester, polyoxyethylene sorbitan fatty acid ester, glycerin fatty acid ester, polyoxyethylenealkyl ether, polyoxyethylenealkylphenyl ether, fatty acid diethanolamide and alkyl glycoside.

In the case where an organized clay composite comprising an onium salt and a curable resin composition between the layers of a lamellar clay mineral is dispersed in a matrix to be used as a resin composite, it is preferable to perform a step of organically modifying the hydroxy groups located on the edges of the lamellar clay mineral before mixing the emulsion thereby to further improve dispersion stability of the organized clay in a resin composite.

In the organic modification of hydroxyl groups located on the edges of the clay mineral, a method of treating hydroxyl groups with a silane coupling agent or a titanium coupling agent can be used. As a silane coupling agent, a generally-used surface treatment agent can be used.

The above-mentioned silane coupling agent is preferably a silane coupling agent represented by formula (I).

[Chem. 1] YₙSiX₄₋ₙ (I)

In the formula (I), n is 0 or an integer of 1 to 3 and Y is at least one member selected from a group consisting of a hydrocarbon group having carbon number of 1 to 25 and an organic functional group comprising a hydrocarbon group having carbon number of 1 to 25 and a substituent. Specific examples of such a substituent is a functional group selected from a group consisting of an ester group, ether group, epoxy group, amino group, carboxyl group, carbonyl group, amide group, mercapto group, sulfonyl group, sulfinyl group, nitro group, nitroso group, nitrile group, halogen atom and hydroxy group. X is a hydrolyzable group and/or a hydroxy group, and the hydrolyzable group is at least one member selected from alkoxy group, alkenyloxy group, ketoxime group, acyloxy group, amino group, aminoxy group, amide group and halogen. When n Y's and 4-n X's are more than one respectively, all of Y's may be the same or different to each other and the same applies to X's.

The hydrocarbon group indicates a monovalent or polyvalent saturated or unsaturated aliphatic hydrocarbon group having a linear or branched chain (i.e. having a side chain), aromatic hydrocarbon group and alicyclic hydrocarbon group, and examples include an alkyl group, alkenyl group, alkynyl group, phenyl group, naphthyl group and cycloalkyl group. In the present specification, alkyl group encompasses a polyvalent hydrocarbon group such as alkylene group unless otherwise stated. Similarly, alkenyl group, alkynyl group, phenyl group, naphthyl group and cycloalkyl group respectively encompass alkenylene group, alkynilene group, phenylene group, naphthylene group and cycloalkylene group and the like.

In formula (I), examples of a silane coupling agent in which Y is a hydrocarbon group having 1 to 25 carbon atoms include one having a polymethylene chain such as octyltriethoxysilane, one having lower alkyl group such as methyltriethoxysilane, one having an unsaturated hydrocarbon group such as 2-hexenyltrimethoxysilane, one having a side chain such as 2-ethylhexyltrimethoxysilane, one having a phenyl group such as phenyltriethoxysilane, one having a naphthyl group such as 3-β-naphthylpropyltrimethoxysilane and one having a phenylene group such as p-vinylbenzyltrimethoxysilane. Examples of a silane coupling agent in which Y is a group having a vinyl group include vinyltrimethoxysilane, vinyltrichlorosilane and vinyltriacetoxysilane. Examples of a silane coupling agent in which Y is a group having an ester group include γ-methacryloxypropyltriethoxysilane. Examples of a silane coupling agent in which Y is a group having an ether group include γ-polyoxyethylenepropyltrimethoxysilane and 2-ethoxyethyltrimethoxysilane. Examples of a silane coupling agent in which Y is a group having an epoxy group include γ-glycidoxypropyltrimethoxysilane.
Examples of a silane coupling agent in which Y is a group having an amino group include γ-aminopropyltrimethoxysilane, γ-(2-aminoethyl)aminopropyltrimethoxysilane and γ-anilinopropyltrimethoxysilane. Examples of a silane coupling agent in which Y is a group having a carboxyl group include γ-(4-carboxyphenyl)propyltrimethoxysilane. Examples of a silane coupling agent in which Y is a group having a carbonyl group include ureidopropyltriethoxysilane. Examples of a silane coupling agent in which Y is a group having a mercapto group include γ-mercaptopropyltrimethoxysilane. Examples of a silane coupling agent in which Y is a group having a halogen atom include γ-chloropropyltriethoxysilane. Examples of a silane coupling agent in which Y is a group having a sulfonyl group include γ-phenylsulfonylpropyltrimethoxysilane. Examples of a silane coupling agent in which Y is a group having a sulfinyl group include γ-phenylsulfinylpropyltrimethoxysilane. Examples of a silane coupling agent in which Y is a group having a nitro group include γ-nitropropyltriethoxysilane. Examples of a silane coupling agent in which Y is a group having a nitroso group include γ-nitrosopropyltriethoxysilane. Examples of a silane coupling agent in which Y is a group having a nitrile group include γ-cyanoethyltriethoxysilane and γ-cyanopropyltriethoxysilane. Examples of a silane coupling agent in which is Y is a group having a hydroxyl group include N,N-di(2-hydroxyethyl)amino-3-propyltriethoxysilane. The hydroxy group may be in a form of a silanol group (SiOH).

A substitution product or derivative of the above-mentioned silane coupling agent can also be used. These silane coupling agents can be used as a single agent or in combination.

Among the above-mentioned silane coupling agents, preferred are octyltriethoxysilane, vinyltriethoxysilane and γ-methacryloxypropyltriethoxysilane as a single agent or in combination.

In the present invention, the amount of the silane coupling agent required for organic modification of the groups located on the edges of the lamellar mineral clay is 1 to 150 parts by mass, preferably 5 to 100 parts by mass, more preferably 10 to 60 parts by mass to 100 parts by mass of the lamellar mineral clay. If the amount is less than 1 part by mass or exceeds 150 parts by mass, a desired dispersibility cannot be achieved.

In the present invention, the organization method using a silane coupling agent is not particularly limited. However, the organization is performed by swelling the lamellar clay mineral with water or an aqueous solvent such as water/alcohol in advance and adding a silane coupling agent to the liquid containing the clay mineral. The concentration of the lamellar clay mineral is not particularly limited as long as the mineral can be uniformly mixed. Preferably, the lamellar clay mineral is about 1 to 5 mass% of the total mass of the lamellar clay mineral and a dispersion medium, which is preferably water or an aqueous solvent (preferably water/alcohol). The method of adding the coupling agent is not particularly limited either, and a desired amount may be added all at once in the beginning, in several parts or continuously. The coupling agent may be diluted with alcohol for being added.

There is no particular limitation on the liquid resin composition used in the present invention, and known thermosetting resin composition and photocurable resin composition may be used.

Specifically, the composition is a radically-curable liquid resin composition comprising allyl ester resin, vinyl ester resin, cross-linkable acrylic resin, epoxy resin, thermosetting modified polyphenylene ether resin, thermosetting polyimide resin, silicone resin, benzoxadine resin, melamine resin, urea resin, phenol resin, bismaleimide-triazine resin, alkyd resin, furan resin, polyurethane resin, aniline resin and the like and a radical curing agent, a reactive diluent (reactive monomer) and various additives as needed. Among these resin compositions, preferred are an allyl ester resin composition and a vinyl ester resin composition. These curable resin compositions may be used singly or two or more of them may be used in combination.

In the present invention, the ratio of a resin composition to be made into a composite and an organized clay mineral is not particularly limited. However, the mass ratio is preferably organized clay:resin of 99-25:1-75, more preferably 75-60:25-40. If the resin composition to be made into a composite is less than 1 mass%, the effect of widening the interlayer cannot be achieved, while if the resin composition exceeds 75 mass%, the recovery of the composite particles becomes difficult.

In the present invention, the method for producing the emulsion of the curable resin composition is not particularly limited and the emulsion can be obtained by adding a resin composition and a surfactant such as an onium salt to water an aqueous solvent and strongly stirring them. A known stirrer such as a homogenizer can be used. It is preferable to prepare the emulsion as close to adding as possible.

The resin molded product using the organized clay composite of the present invention can be molded by either of the method of directly molding/curing the organized clay composite comprising a curable resin composition introduced between the layers of the lamellar clay mineral and the method of dispersing the organized clay composite in a matrix material and then molding/curing the dispersion. As a former method, for example, a transparent film formation by vacuum press is available, and as a latter method, a transparent plate formation is available by injecting the dispersion between the glass plates having a spacer of a predetermined thickness therebetween.

### EXAMPLES

Hereinafter, the present invention will be explained in more detail below with reference to Examples and Comparative Examples, but the present invention is not limited thereto. Methods for evaluating the organized clay composite and obtained in Examples and Comparative Examples are described below.

### [Interlayer distance]

[0036] The interlayer distance was calculated based on the peak indicating the interlayer distance of the lamellar clay mineral observed in low angle region (2θ: 2 to 10°) by X-ray diffraction (XRD) measurement. XRD measurement was performed using diffractometer RU-200B produced by Rigaku Corporation and a target generating Cu-Kα radiation generated at 50 kV and 180 mA at a diffraction angle 2θ of 2 to 20° and a stepping interval of 0.2°.

### [Amount of the hybridized organic substance]

Mass decrease in the temperature range from 50 to 600°C in the thermal analyses coupled with mass spectrometry was used as an indicator. The measurement was performed using EXSTR6000 TG/DTA6300 (manufactured by SII NanoTechnology Inc.) under nitrogen atmosphere and heating rate of 10°C/min.

### [Transparency]

Transparency of the resin composite is evaluated using the light transmittance measured at 600 nm using spectrophotometer V-570 produced by JASCO Corporation. The transparent resin composite of the present invention has light transmittance of 85 % or more.

### Example 1:

40 g of smectite (single wall nanotube (SWN); produced by Co-op Chemical Co., Ltd.; MB adsorption equivalent of 101 meq/100 g) was added to 2 liter of pure water and the mixture was stirred at 60°C for two hours to sufficiently swell the smectite. Thereto was added 16 g of γ-methacryloxypropyltriethoxysilane (γ-MPS) (KBE-503; manufactured by Shin-Etsu Chemical Co., Ltd.) (the amount of the silane coupling agent was four tenth of that of smectite) and the mixture was stirred for another six hours to organize hydroxy groups located on the edges of the smectite. An emulsion was added thereto all at once, which emulsion was obtained by emulsifying 20 g of allyl phthalate resin DD201 (manufactured by Showa Denko K.K.), 0.8 g of 1,1-di(t-hexylperoxy)-3,3,5-trimethylcyclohexane (PERHEXA TMH; manufactured by NOF Corporation) as a radical initiator, 16.1 g of 75% trioctylmethylammoniumchloride in isopropylalcohol solution (TOMAC-75; manufactured by LION AKZO Co., Ltd.) (corresponding to 75% of MB adsorption equivalent), 1 g of polyoxyethylenealkyl (C8-C18) methylammonium salt (Ethoquad C/25; manufactured by LION AKZO Co., Ltd.) (corresponding to 2.5% of MB adsorption equivalent) and 200 g of pure water in advance using a homogenizer. After the addition, the mixture was stirred for 30 minutes to thereby perform cation exchange and hybridization of a resin composition. Subsequently, the product was subjected to solid-liquid separation and washing to remove by-product salts and then dried to obtain an organized clay composite.

### Example 2:

An organized clay composite was obtained in the same way as in Example 1 except that the composition of the emulsion was changed to 40 g of DD201 (manufactured by Showa Denko K.K.), 1.6 g of PERHEXA TMH (manufactured by NOF Corporation), 16.1 g of 75% trioctylmethylammoniumchloride in isopropyl alcohol solution (TOMAC-75; manufactured by LION AKZO Co., Ltd.) (corresponding to 75% of MB adsorption equivalent), 2 g of polyoxyethylenealkyl (C8-C18) methylammonium salt (Ethoquad C/25; manufactured by LION AKZO Co., Ltd.) (corresponding to 5% of MB adsorption equivalent) and 200 g of pure water.

### Example 3:

An organized clay composite was obtained in the same way as in Example 1 except that the composition of the emulsion was changed to 40 g of 1,4-cyclohexanedicarboxylic acid diallyl (H-DATP; manufactured by Showa Denko K.K.), 1.6 g of PERHEXA TMH (manufactured by NOF Corporation), 16.1 g of 75% trioctylmethylammoniumchloride in isopropyl alcohol solution (TOMAC-75; manufactured by LION AKZO Co., Ltd.) (corresponding to 75% of MB adsorption equivalent), 2 g of polyoxyethylenealkyl (C8-C18) methylammonium salt (Ethoquad C/25; manufactured by LION AKZO Co., Ltd.) (corresponding to 5% of MB adsorption equivalent) and 200 g of pure water.

### Example 4:

An organized clay composite was obtained in the same way as in Example 1 except that the composition of the emulsion was changed to 60 g of DD201 (manufactured by Showa Denko K.K.), 2.4 g of PERHEXA TMH (manufactured by NOF Corporation), 16.1 g of 75% trioctylmethylammoniumchloride in isopropyl alcohol solution (TOMAC-75; manufactured by LION AKZO Co., Ltd.) (corresponding to 75% of MB adsorption equivalent), 3 g of polyoxyethylenealkyl (C8-C18) methylammonium salt (Ethoquad C/25; manufactured by LION AKZO Co., Ltd.) (corresponding to 7.5% of MB adsorption equivalent) and 200 g of pure water.

### Example 5:

An organized clay composite was obtained in the same way as in Example 1 except that the composition of the emulsion was changed to 40 g of DD201 (manufactured by Showa Denko K.K.), 1.6 g of PERHEXA TMH (manufactured by NOF Corporation), 16.1 g of 75% trioctylmethylammoniumchloride in isopropyl alcohol solution (TOMAC-75; manufactured by LION AKZO Co., Ltd.) (corresponding to 75% of MB adsorption equivalent), 2 g of polyoxyethylenesorbitan laurate (manufactured by Nakalai Tesque, Inc.) (corresponding to 5% of MB adsorption equivalent) and 200 g of pure water.

### Example 6:

An organized clay composite was obtained in the same way as in Example 1 except that hydroxy groups located on the edges of smectite was not treated with γ-methacryloxypropyltriethoxysilane.

### Comparative Example 1:

The obtained organized clay composite corresponds to the raw material of smectite as it is, which is not subjected to organizing treatment.

### Comparative Example 2:

An organized clay was obtained in the same way as in Example 1 except that organizing treatment of hydroxy groups located on the edges of smectite and addition of allyl phthalate resin and a radical initiator were not condoucted and only cation exchange of interlayer cations to organic onium ions was conducted.

### Comparative Example 3:

Instead of adding the emulsion in Example 1, allyl phthalate resin and a radical initiator were added after the addition of an organic onium salt. Then sedimentation separation was caused and an organic clay composite having good dispersibility could not be obtained.

The results of XRD measurement and the measurement of the organic substance amount are shown in Table 1.

**[Table 1]**

| | Organization of hydroxy groups located on the edge | Cation Exchange | Components of resin composite | | Interlayer distance (nm) | Amount of organic substance (%) |
|---|---|---|---|---|---|---|
| | | | kind | Amount * | | |
| Example 1 | Conducted | Conducted | DD201 | 50 | 2.4 | 47.3 |
| Example 2 | Conducted | Conducted | DD201 | 100 | 2.6 | 57.6 |
| Example 3 | Conducted | Conducted | H-DATP | 100 | 2.7 | 49.0 |
| Example 4 | Conducted | Conducted | DD201 | 150 | 2.9 | 64.8 |
| Example 5 | Conducted | Conducted | DD201 | 100 | 2.7 | 54.8 |
| Example 6 | Not conducted | Conducted | DD201 | 50 | 2.2 | 41.3 |
| Comparative Example 1 | Not conducted Not conducted | Not conducted | None | | 1.4 | 0 |
| Comparative Example 2 | Not conducted | Conducted | | | 1.8 | 23.5 |

| | | | | | | |
|---|---|---|---|---|---|---|
| * mass based on that of the lamellar clay mineral | | | | | | |

### Examples 7 to 8:

Each of the organized clay composites obtained in Example 3 and Example 4 was sandwiched between PET films and after reducing pressure, the composite was subjected to vacuum pressing at 80°C, pressure of 12.5 MPa for one minute. The film taken out was sandwiched between aluminum plates and cured in an oven in a temperature profile of 110°C for one hour and 140°C for 0.5 hour to obtain a transparent film. Each of the obtained films had transmittance of 91.3% (Example 7) and 91.1% (Example 8), respectively.

### Example 9:

The organic clay composite of Example 4 was blended so that the component ratio of the organized clay to allyl ester resin becomes 5/95, and PERHEXA TMH (manufactured by NOF Corporation) was further added thereto in an amount of 4 mass% of to 100 mass% of the resin and the mixture was stirred using a homogenizer to obtain a resin composite. After deaeration, the resin composite was poured between two glass plates sandwiching a spacer 1 millimeters thick; and cured in a temperature profile of 80°C for 0.5 hour, 110°C for one hour and 140°C for one hour to obtain a transparent plate. The transmittance of the obtained plate was 88.7%.

As is clear from Table 1, the present invention enables providing an organized clay composite having a resin composition intercalated between the layers and expanded interlayer distance and exhibiting good dispersibility; and providing a transparent resin composite by directly curing the organized clay composite or by uniformly dispersing the organized clay composite in a hybrid substrate.

## Claims

1. The method for producing an organized clay composite **characterized in** simultaneously performing the following steps:
a step of performing cation exchange from the metal cation between the layers of a lamellar clay mineral to an organic onium ion; and
a step of intercalating a curable resin composition between the layers of the lamellar clay mineral,
by after swelling a lamellar clay mineral with water or an aqueous solvent, adding and mixing thereto an emulsion in which a curable resin composition is emulsified in advance using an organic onium salt or using an organic onium salt and a nonionic surfactant.

2. The method for producing the organized clay composite as claimed in claim 1, wherein the organic modification of the hydroxy groups located on the edges of the swollen mineral is conducted before adding and mixing the emulsion.

3. The method for producing the organized clay composite as claimed in claim 2, wherein the organic modification of the hydroxy groups located on the edges of the swollen mineral is performed by a treatment with a silane coupling agent.

4. The method for producing the organized clay composite as claimed in claim 3, wherein the silane coupling agent used in the treatment by the silane coupling agent is 1 to 150 part(s) by mass to 100 parts by mass of the lamellar clay mineral.

5. The method for producing the organized clay composite as claimed in claim 1, in which the use amount of the organic onium ions salt is from 60 to 120 % of methylene blue (MB) adsorption equivalent of the lamellar clay mineral.

6. The method for producing the organized clay composite as claimed in claim 1 above, wherein the lamellar clay mineral is layered silicate.

7. The method for producing the organized clay composite as claimed in claim 6, wherein the layered silicate is at least one member selected from a group consisting of smectite, talc, kaolinite and mica.

8. The method for producing the organized clay composite as claimed in claim 1, wherein, as to the ratio of the lamellar clay mineral and water or an aqueous solvent, the mass of the lamellar clay mineral is 1 to 5% to the total mass of the lamellar clay mineral and water or an aqueous solvent.

9. The method for producing the organized clay composite as claimed in claim 1, wherein the lamellar clay mineral has an average-number particle diameter of 10 to 300 nm and the cured product of the curable resin composition is transparent.

10. An organized clay composite produced by the production method claimed in any one of claims 1 to 9.

11. An organized clay composite in which the edges of the lamellar clay mineral having an average-number particle diameter of 10 to 300 nm are organically modified and an organic onium ions and a curable resin composition are present between the layers of the lamellar clay mineral.

12. The organized clay composite as claimed in claim 11, wherein the lamellar clay mineral is layered silicate.

13. The organized clay composite as claimed in claim 12, wherein the layered silicate is at least one member selected from a group consisting of smectite, talk, kaolinite and mica.

14. An organized clay composite as claimed in claim 10 or 11, wherein the curable resin composition is a radically curable liquid resin composition.

15. A resin molded product obtained by molding and curing the organized clay composite claimed in any one of claims 10 to 14.

16. The transparent resin molded product as claimed in 15 above, wherein the resin molded product is a transparent film or a transparent plate.
